# EUROPEAN PATENT APPLICATION

(11) **EP 4 574 234 A1**
(43) Date of publication of application: **25.06.2025**
(21) Application number: 23220137.6
(22) Date of filing: 22.12.2023
(51) Int. Cl.: B01D 53/04, B01D 53/26

(54) **PROCESS FOR THE CAPTURE OF CO2 FROM A GASEOUS COMPOSITION**

(71) Applicant: Carbyon Holding B.V., 5656 AE Eindhoven (NL)
(72) Inventor: van Hoof, Arno Johannes Franciscus, Eindhoven (NL); Göktolga, Mustafa Ugur, Eindhoven (NL)
(74) Representative: Hoekman, Joram Salvador

(57) **Abstract**

The invention relates to a process for the capture of CO₂ from a gaseous composition, such as air, comprising:
- a sorption step, in which a solid sorbent capable of sorbing CO₂ and H₂O is contacted with the gaseous composition, thereby sorbing CO₂ from the gaseous composition to the sorbent, and
- a desorption step, in which the sorbent is heated to a temperature higher than that in the sorption step for releasing at least a part of the sorbed CO₂ from the sorbent
in which a sorption step subsequent to the desorption step substantially coincides with a cooldown phase of the desorption step.

## Description

The invention relates to a process for the capture of CO₂ from a gaseous composition, such as air, comprising:
- a sorption step, in which a solid sorbent capable of sorbing CO₂ and H₂O is contacted with the gaseous composition, thereby sorbing CO₂ from the gaseous composition to the sorbent, and
- a desorption step, in which the sorbent is heated to a temperature higher than that in the sorption step for releasing at least a part of the sorbed CO₂ from the sorbent.

CO₂ or carbon dioxide is a chemical compound which is released by the combustion of fossil fuels. There is a desire to reduce the footprint of human mankind to the amount of CO₂ released into the atmosphere, because it is generally accepted that the increased concentration of CO₂ in ambient air causes climate change. CO₂ may be captured from exhaust streams of industrial processes. However, due to the already increased CO₂ concentration in the air since the start of the Industrial Revolution, there is also an interest to remove CO₂ from ambient air. Processes which are aimed to capture CO₂ directly from air are also referred to as Direct Air Capture (DAC).

Capture processes typically involve a plurality of alternating sorption and desorption steps, which may be carried out in a cyclical manner. In the adsorption step, a sorbent capable of binding CO₂, which is contained in a reactor, is contacted with a gaseous composition (which is air, in the case of DAC). This causes the CO₂ to be sorbed by the sorbent and the CO₂ concentration in the gaseous composition to be reduced in the outlet relative to the inlet. During the subsequent desorption step, the reactor is closed, and the conditions within the reactor are changed in order to release the sorbed CO₂, which may be used for various purposes (e.g. conversion or storage). Various types of sorbents are currently investigated, one of which being the solid sorbents described in WO 2022/013456 A1. The sorbents described herein comprise a porous support with a sorbent coated onto the pore walls of the porous support.

Despite the CO₂ content in air having increased to what it used to be, the global average concentration of CO₂ in the atmosphere is currently still approximately 424 ppm. In view of this concentration, quite a substantial flow through the sorbent is needed to capture a significant amount of CO₂ directly from air, which makes it challenging to operate a DAC process efficiently. In particular, ambient air contains other components in addition to CO₂, which may negatively impact the performance of the sorbent in the sense that these have a further negative influence on the energy balance. In the case of solid sorbents, one such an ingredient is water (H₂O).

WO 2019/238488 A1 discloses a method for separating gaseous carbon dioxide and water from a gas mixture by cyclic adsorption/desorption using a sorbent material adsorbing said carbon dioxide, using a unit containing an adsorber structure, wherein it comprises the following repeating steps: (a) contacting said gas mixture with said sorbent material in an adsorption step; (b) at least one of evacuating said unit and heating said sorbent material in a desorption step and extracting the gaseous carbon dioxide and water vapour and separating gaseous carbon dioxide from water vapour downstream of the unit; (c) cooling the adsorber structure with said sorbent material and re-pressurisation of the unit. The steps are carried out in the sequence [(a)-(b)-(c)-]ₙ with n any integer above 2.

WO 2011/137398 A1 discloses a method and a system capable of removing carbon dioxide directly from ambient air to obtain pure CO₂. The method composes the steps of generating heat from a production process, applying the heat to water to co-generate saturated steam, wherein said sorbent is alternately exposed to a flow of ambient air during said removal phase, thereby enabling said sorbent to sorb, and therefore remove, carbon dioxide from said ambient air, and to a flow of the co-generated steam during the re-generation and capture phase, after the sorbent has adsorbed the carbon dioxide, thereby enabling regeneration of such sorbent, and the resultant capture in relatively pure form of the adsorbed carbon dioxide. The system provides the sorbent substrate and equipment for carrying out the above method, and provides for obtaining purified carbon dioxide for further use in agriculture and chemical processes.

Rodriguez-Mosqueda et al., Ind. Eng. Chem. Res. 2018, 57, 3628-3638 is a parametrical study on CO₂ capture from ambient air using hydrated K₂CO₃ supported on an activated honeycomb.

All of the methods disclosed in the above publications suffer from a suboptimal process efficiency. It is an object of the invention to alleviate or even obviate the above-mentioned disadvantages.

This object is achieved with a process for the capture of CO₂ from a gaseous composition, such as air, comprising:
- a sorption step, in which a solid sorbent capable of sorbing CO₂ and H₂O is contacted with the gaseous composition, thereby sorbing CO₂ from the gaseous composition to the sorbent, and
- a desorption step, in which the sorbent is heated to a temperature higher than that in the sorption step for releasing at least a part of the sorbed CO₂ from the sorbent
in which a sorption step subsequent to the desorption step substantially coincides with a cooldown phase of the desorption step.

In the present invention, it has surprisingly been found that it is advantageous in terms of process efficiency if a sorption step subsequent to the desorption step substantially coincides with a cooldown phase of the desorption step. Consequently, residual heat transferred into the sorbent during the desorption step (typically by active heating) is used during the subsequent or next sorption step to keep the sorbent temperature warm. This is fundamentally different from the process disclosed in WO 2019/238488 A1, in which the sorbent is actively cooled down after a desorption step, before starting the next sorption step. The method according to the invention is also different from WO 2011/137398 A1. While the process disclosed therein suggests the use of process heat, which is a form of residual heat, such process heat does not originate from a desorption step, and the heat is used for generating steam from water, not for keeping the sorbent warm.

A or each desorption step has a cooldown phase after the desorption step. During the desorption step, the sorbent is actively heated. During the subsequent cooldown phase, the sorbent is cooling down from the temperature at which desorption took place during the desorption step towards an ambient temperature, preferably by passive cooling. The ambient temperature may be the temperature at or near the inlet of a reactor in which the sorbent is accommodated, or may be an exterior temperature in close proximity of the reactor. It should be noted that the ambient temperature is not a fixed value and that in particular, it may depend on e.g. weather and geographical location.

In particular, the requirement of coincidence (or concurrence, or overlap) of the sorption step subsequent to the desorption step with the cooldown phase may in particular mean that the sorption step uses a part of the cooldown phase, preferably a part at or near the start of the cooldown phase at which the temperature difference between the sorbent and the ambient temperature is relatively large compared to an end part of the cooldown phase. The sorption step and the cooldown phase may for instance have an overlap between 70-99 %, preferably between 75-95 %, more preferably between 80-90 %, all calculated in terms of the time of said sorption step relative to the cooldown phase. Typically, the part of the cooldown phase coinciding with the sorption step may have a duration of between 10 and 600 seconds, preferably between 50 and 400 seconds, more preferably between 100 and 300 seconds, most preferably between 150 and 200 seconds.

The sorption step and the desorption step are not necessarily in the order mentioned, which may mean that the process may commence with a desorption step. However, most typically, the process will start with a sorption step.

Any desorption step in the process may immediately follow a sorption step. Any sorption step in the process may immediately follow a desorption step. However, for either of these steps, it may be possible to have an optional other step (not being a desorption or sorption step) between these steps (i.e. between sorption and desorption steps and/or between desorption and sorption steps), such as any single step or combination of steps selected from optional steps like an evacuation step, a waiting step and a flushing step.

The sorbent is typically a chemical sorbent, i.e. a sorbent capable of bonding CO₂ by chemically reacting with it.

The process is typically a Direct Air Capture (DAC) process, which implies that the gaseous composition, which is air, comprises CO₂ and H₂O. Nevertheless, it is also possible to use the process for other gaseous compositions containing CO₂ and H₂O.

The process according to the invention is typically part of a temperature swing and/or pressure swing process (e.g. a vacuum pressure swing process), during which kind of processes the CO₂ is removed from the sorbent and collected in a suitable manner. In the desorption step, the heating is typically to a temperature in the range of 50- 180 °C, preferably 80 - 150 °C, most preferably 110 - 130 °C and the sorbent is capable to thereby release sorbed CO2. The CO₂ collected in the process according to the invention may be post-processed in any way known by a person skilled in the art. Non-limiting examples of post-processing are for instance conversion into fuels, supply of said CO₂ to industries such as vertical farming, or geologic sequestration.

The sorbent is preferably accommodated in a housing or reactor. The reactor typically comprises an air displacement device or suction device for sucking air into the reactor. Such suction devices are known in the art and include for example a ventilator or fan. This suction device is arranged such that air is able to be sucked into the reactor. The sorbent may be transported between a sorption location and a desorption location in carrying out the method, but most typically the sorbent is at the same location during the sorption step and the desorption step (i.e. the reactor is static).

While the invention is not limited to a particular solid sorbent, it is observed that the invention works particularly well with a sorbent which comprises a) a carrier with an internal pore structure and b) an active ingredient capable of sorbing CO₂ provided within the internal pore structure, preferably leaving a central part of a pore (or the center of the pore) of the internal pore structure free from active ingredient.

It is observed that a solid sorbent having such a structure provides a sorbent with a relatively large surface area for the active ingredient to be provided therein, thereby maximizing the capacity, and hence increasing process efficiency. Particularly preferred carriers are carriers with a surface area of at least 500 m²/gram, more preferably at least 1.000 m²/gram, most preferably at least 2.000 m²/gram.

It is furthermore observed that sorbents which sorb relatively fast work particularly well. Fast sorbents may for instance be sorbents in which a central part of a pore of the internal pore structure (i.e. the center of the pore) is left free from active ingredient (and other solids and/or liquids), allowing the gaseous composition to reach the active ingredient by flow through the internal pore structure to the active ingredient, with little or no need to diffuse through a layer of active ingredient. Alternatively and/or additionally, fast sorbents may be sorbents in which a major part (e.g. at least 50% by volume, more preferably at least 70% by volume, even more preferably at least 80% by volume, most preferably at least 90% by volume) of the originally available pore volume (i.e. the pore volume of the naked carrier-without active ingredient) is maintained free from active ingredient after providing the active ingredient onto the carrier. Either of these two may be confirmed by physisorption of Ar or N₂, in combination with BET analysis. Alternatively and/or additionally, fast sorbents may be sorbents capable of sorbing at least 0.05 grams of CO₂ per kg or sorbent per second, preferably at least 0.10 grams of CO₂ per kg or sorbent per second, more preferably at least 0.15 grams of CO₂ per kg of sorbent per second, most preferably at least 0.20 grams of CO₂ per kg of sorbent per second. Alternatively and/or additionally, fast sorbents may be sorbents capable of saturating relatively quickly, e.g. from 0% to 75% saturation by weight within 600 seconds. Saturation may in particular mean to achieve an equilibrium capacity of the sorbent. Such an equilibrium capacity may vary as conditions (e.g. temperature, relative humidity, pressure) change.

The discrimination between a carrier and an active ingredient does not necessarily mean that the active ingredient is the only of these two components having a capability of capturing CO₂ and/or H₂O, but only means that the active ingredient has a higher affinity towards and/or capacity for capturing any of these two components from the gaseous composition.

In a particular embodiment, the carrier comprises activated carbon. While such an activated carbon is in principle not limited to a specific form, it is preferably in the form of a granulate or a fibre. The granulate preferably has an average main dimension (e.g. diameter) of between 100-1.000 µm, preferably between 125-500 µm, more preferably between 150-400 µm, most preferably between 200-300 µm. The fibre may be part of a textile, a mesh or a felt.

While the sorbent is in principle not restricted to a particular type, and may for instance be one of a zeolite, an amine, a metal organic framework (MOF), in a preferred embodiment, the sorbent comprises one or more of an alkali or alkaline earth carbonate and preferably comprises and more preferably essentially consists of potassium carbonate. When the sorbent comprises a carrier, such as an activated carbon-based carrier with an active ingredient in the internal pore structure, the active ingredient comprises and preferably essentially consists of this alkali or alkaline earth carbonate (e.g. potassium carbonate). A sorbent essentially consisting of potassium carbonate may mean that at least 90%, preferably at least 95%, more preferably at least 99%, even more preferably at least 99.9%, most preferably at least 99.99% of the sorbent , all on a weight-per-weight-basis is potassium carbonate. If the sorbent comprises a) a carrier with an internal pore structure and b) an active ingredient capable of sorbing CO₂ provided within the internal pore structure, it is the active ingredient which preferably essentially consists of potassium carbonate, which means that at least 90%, preferably at least 95%, more preferably at least 99%, even more preferably at least 99.9%, most preferably at least 99.99% of the active ingredient, all on a weight-per-weight-basis is potassium carbonate.

A method for impregnating an active carbon-based carrier with potassium carbonate is disclosed by Meis et al., Ind. Eng. Chem. Res., 2013, 52, 12812-12818. Potassium carbonate is expected to react with CO₂ in an equilibrium reaction with water producing potassium bicarbonate:

K₂CO₃ + CO₂ + H₂O ↔ 2 KHCO₃

In addition, alternative pathways, such as a pathway through a sesquihydrate, as discussed by Duan et al. in J. Phys. Chem. C. 2012, 116, 14461-14470 are also conceived, and the invention is not restricted to a particular pathway.

Preferably, a desorption step subsequent to the sorption step that coincides with the cooldown phase is started at or near the end of the cooldown phase. By starting a subsequent desorption step, or further desorption step, at or near the end of the cooldown phase, it is ensured that a major part of the sorption step subsequent to a desorption step occurs during the cooldown phase from the desorption step, thereby further increasing process efficiency, compared to a process in which the sorbent reaches a temperature substantially equal to the ambient temperature. Typically, the end part of the cooldown phase not coinciding with the sorption step has a duration of at least 5 seconds, preferably at least 10 seconds, more preferably at least 15 seconds, most preferably at least 20 seconds, and consequently, in this embodiment, the next sorption step is initiated at least such a time span before the sorbent reaches the ambient temperature.

In a preferred embodiment, the cooldown phase has a duration chosen to keep a temperature of the sorbent throughout the sorption step at least 1 °C above an ambient temperature, preferably at least 2 °C above the ambient temperature, more preferably at least 5 °C above the ambient temperature, most preferably at least 10 °C above the ambient temperature. By keeping the temperature of the sorbent at such levels above an ambient temperature throughout the sorption step, sorption of H₂O is further suppressed. Apparently, such operation causes an increased imbalance between the solid sorbent and the surroundings which leads to preferential sorption of CO₂ over H₂O compared to a case where the temperature of the sorbent would be at a temperature substantially equal to the ambient temperature.

Preferably, at a start of coincidence of the cooldown phase with the sorption step, the temperature of the sorbent is at least 10 °C above the ambient temperature, preferably at least 25 °C above the ambient temperature, more preferably at least 50 °C above the ambient temperature, most preferably at least 100 °C above the ambient temperature. It has generally been observed that keeping the temperature difference between the sorbent and the ambient temperature at the start of the sorption step relatively large, maybe even as large as possible, leads to a decrease of H₂O uptake compared to CO₂ uptake by the sorbent.

Preferably, during a sorption step subsequent to a desorption step, the temperature of the sorbent is at such a temperature above an ambient temperature causing the molar ratio of H₂O sorbed to CO₂ sorbed to be reduced relative to sorption of the same sorbent at an ambient temperature. Operating at such a temperature optimizes process efficiency.

Preferably, the ratio of a) the amount of H₂O sorbed divided by the amount of CO₂ sorbed during the sorption step with the temperature of the sorbent above the ambient temperature to b) the amount of H₂O sorbed divided by the amount of CO₂ sorbed during the sorption at a temperature substantially equal to the ambient temperature is at most 0.8, preferably at most 0.6, preferably at most 0.4, more preferably at most 0.3, most preferably at most 0.25. In other words, the ratio is preferably relatively small, which indicated that the CO₂ is more preferentially sorbed compared to H₂O compared to a similar situation with a sorbent temperature which substantially corresponds to, e.g. is equal to, ambient temperature.

Typically, the process is a cyclic process, comprising a plurality of cycles, wherein each cycle comprises one sorption step and one desorption step. This allows a sorbent to be used many times to capture CO₂ from air, increasing process efficiency. Preferably, the number of cycles is at least 2, at least 5, at least 10, at least 20, at least 50, at least 100. In general, the steps are carried out in the sequence [sorption-desorption-]ₙ with n any integer above 2, preferably repeating continuously. As mentioned, optional steps not being a sorption step or a desorption step may be inserted between some (or all) of the steps.

In case of a cyclic process, the process is thus typically a process comprising a plurality of cycles, wherein each cycle comprises a sorption step and a desorption step, wherein in the sorption step, a solid sorbent capable of sorbing CO₂ (most typically comprising a carrier with an internal pore structure and an active ingredient within the internal pore structure) is contacted with the gaseous composition, thereby sorbing CO₂ from the gaseous composition to the sorbent, and wherein in the desorption step, the sorbent is actively heated to a temperature higher than that in the sorption step for releasing at least a part of the sorbed CO₂, wherein the sorption step of at least one, such an n+1th cycle (but possibly also more than one or even all cycles) substantially coincides with a cooldown phase of the desorption step of the nth cycle.

In addition to the residual heat provided in the sorption step to the sorbent from a desorption step preceding said sorption step, it is possible to use additional heating means.

For instance, in another preferred embodiment, the contacting of the gaseous composition with sorbent causes an exothermic chemical reaction of CO₂ and optionally H₂O with the active ingredient, thereby heating the sorbent. In order to ensure the desired temperature of the sorbent, the sorbent is contacted with the gaseous composition during the sorption step at a flow speed chosen such to keep the sorbent at a set temperature. Some sorbents cause an exothermic chemical reaction when capturing CO₂ in a reaction with CO₂ and optionally H₂O. Potassium carbonate is an example of a sorbent reacting exothermically. The heat generated by this reaction also contributes to keeping the sorbent at a set temperature, preferably a temperature above ambient temperature. However, a relatively high flow speed over the sorbent may cause the sorbent to be cooled down relatively fast. Therefore, the flow speed is chosen to maintain a set temperature, thereby balancing between too fast cooling rates of the sorbent at a high flow speed, and not achieving a sufficient amount of capture at a low flow speed. The flow speed may be chosen such that a CO₂ capturing efficiency (i.e. the percentage of CO₂ captured by the sorbent) should be above 50% time-averaged throughout the sorption and above 20% at any point in time during sorption. Said temperature may additionally or alternatively progressively decrease over time.

In addition to this or as an alternative to this, the sorbent may be actively heated, preferably with one of steam, resistive heating, microwave heating, electromagnetic radiative heating and dielectric heating. Resistive heating may be either Joule heating or heating with heating wires. Such active heating is preferably of interest when the sorbent is thermally decoupled from air (i.e. when the heat conductivity from the sorbent to air is at least 10 times lower than the heat conductivity of the sorbent itself).

Preferably, in the sorption step, the gaseous composition is directed from an inlet towards an outlet, through the sorbent. The housing or reactor which is preferably provided for accommodating the sorbent, typically contains such an inlet and an outlet, ensuring that as a consequence of the flow of the gas through the housing (or reactor), the gaseous composition is contacted with the sorbent, causing the sorbent to sorb CO₂ from the gaseous composition, thereby relatively reducing a CO₂ concentration in the gaseous composition as it exits the outlet relative to a CO₂ concentration of the gaseous composition at the inlet.

Typically, the sorption step is essentially an adsorption step. In other words, the sorbent (or, where applicable, more specifically: the active ingredient provided on the internal pore structure thereof) is such that a part of CO₂ is able to adsorb to the sorbent (or active ingredient) at or near the surface of the sorbent (or active ingredient), minimizing the amount of sorbent (or: active ingredient) which the CO₂ is required to diffuse through the sorbent (or active ingredient) before it is able to react with CO₂. A part in this respect particularly means that at least 10% by weight of the active ingredient is configured to be in direct contact with the gaseous composition during the process according to the invention, preferably at least 30%, more preferably at least 45%, even more preferably at least 60%, most preferably at least 75%.

In an embodiment, the desorption step is carried out at such a heating rate that most of the CO₂ is released before most of the H₂O is released. It has been found that when carrying out a desorption step at a suitably high heating rate, sorbents release CO₂ faster than H₂O. In other words, CO₂ desorption and H₂O desorption are decoupled. As a consequence, it is possible to carry out the process such that most of the CO₂ is released before most of the H₂O, thereby increasing process efficiency. This may for instance be done by starting a sorption step subsequent to the desorption step at a moment after which most of the CO₂ is released but before most of the H₂O is released. The suitably high heating rate depends on the particular sorbent, and may be determined by carrying out the sorption at a plurality of heating rates, and by measuring the release of both CO₂ and H₂O from the sorbent in the desorption step. At suitably high heating rate, the release profiles over time of CO₂ and H₂O both show a maximum, wherein the maximum of H₂O release is delayed relative to the maximum of CO₂ release by a characteristic time difference. Said time difference may for instance be at least 10 seconds, preferably at least 30 seconds, more preferably at least 50 seconds, even more preferably at least 100 seconds, most preferably at least 200 seconds, for instance at least 300 seconds, at least 400 seconds or even at least 500 seconds.

Typically, the at least one of a) the temperature of the sorbent and b) the difference between the temperature between the sorbent and the ambient temperature decreases from a maximum at or near an onset of the sorption step to a minimum at or near an end of the sorption step, preferably in a continuous manner.

The invention is further elucidated with reference to the following examples.

### Sorbent synthesis:

A K₂CO₃/Activated carbon (AC) sorbent was synthesized by applying incipient wetness impregnation following procedures similar to Meis et al., Ind. Eng. Chem. Res., 2013, 52, 12812-12818.

### Granulates

Activated carbon granulates were dried in an oven at 110 °C overnight prior to impregnation. Next, granulates were impregnated with an aqueous K₂CO₃ solution. Afterwards, the sample was dried in air in an oven at 110 °C overnight, resulting in the K₂CO₃/AC sorbent. K₂CO₃/AC-felt sorbent were synthesized in a similar way.

### Breakthrough measurements

CO₂ and H₂O adsorption and desorption performance (capacity and kinetics) were measured in an in-house developed breakthrough analyser setup. In a typical experiment, between 100-600 mg of sample (sorbent) was loaded in a packed bed reactor (ID = 8 mm) with a quartz wool plug placed on top and bottom of the bed to fix the location. The temperature was measured by a thermocouple directly placed in the packed-bed reactor. Before starting the experiment, the sample was heated to fully degas the sample. The gasses fed to the reactor were controlled by Bronkhorst Mass Flow Controllers in combination with fully automated Labview software allowing control of gas flow, relative humidity and sorbent temperature. The outlet gas composition was measured using an on-line Quadrupole Mass Spectrometry (QMS, Hiden Analytical). The analysed gases comprised N₂, CO₂, O₂ and H₂O. An external calibration method was used to determine the Relative Sensitivity Factor of each compound, allowing accurate quantification of the gas concentration.

During the adsorption the sorbent was exposed to synthetic air (400 ppm CO₂, 20% O₂, balance N₂, flowrate ranging between 0.3 and 3.0 l/min) with a relative humidity of 35% at 25 °C for an adsorption time ranging between 10 and 1200 seconds. Subsequently, the sorbent was exposed to dry nitrogen and heated to 80 - 120 °C for 50 - 800 seconds. These adsorption and desorption cycles were repeated multiple times.

In order to quantify the amount of adsorbed and desorbed CO₂ and H₂O the adsorption and desorption data were compared with a blank experiment, where no sample capable of sorbing CO₂ and H₂O was present in the reactor.

### Example 1: Hot adsorption for activated carbon granulates

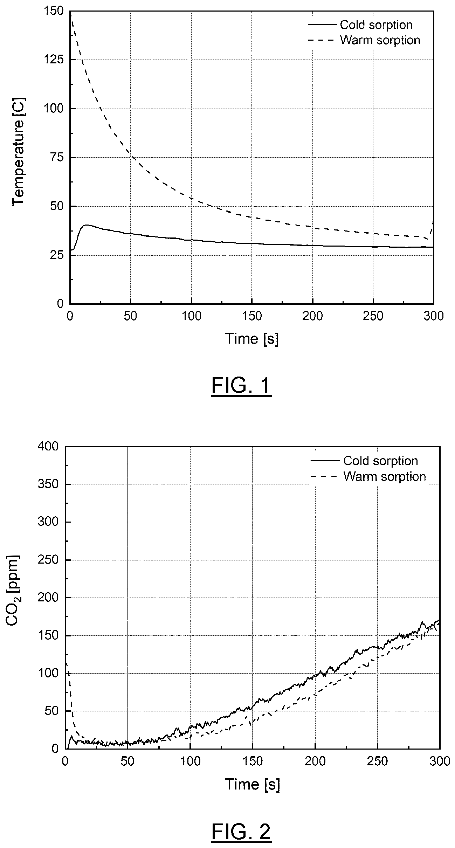

For the breakthrough experiments, 400 mg of sample was loaded in the Packed Bed Reactor (PBR) and the experiment was started for multiple adsorption and desorption cycles, without any cooldown time in between. The first cycle had no preceding desorption step, thus, the effective operating temperature was at room temperature (27 °C) as can be seen in Figure 1. At the start of first adsorption step the initial temperature at t=0 is at 27 °C. As time progresses during adsorption, the effective temperature increases to ~38 °C due to the heat of adsorption resulting from both CO₂ and H₂O sorption on the sample. In the second sorption step which is indicated Figure 1 with the dashed line, the sorbent is still warm from the preceding desorption step. The initial temperature is 150 °C at t=0 and decreases continuously towards 27 °C in 300 seconds. The breakthrough experiments were performed with 400 ppm CO₂ in air (20% O₂/80% N₂) and 12.000 ppm H₂O. For both cases (cold and warm sorption) the CO₂ breakthrough curve (shown in Figure 2) shows a significant CO₂ adsorption as the first CO₂ signal detected at the outlet occurs after ~100 seconds, still after the full adsorption time of 300 seconds the CO₂ did not recover to 400 ppm. This indicates that the sample is still sorbing CO₂ and is not saturated at the end of the sorption step. In the following desorption steps the sample was heated in N₂ to 150 °C to fully desorb the sample and the quantify and verify the amount sorbed CO₂ and H₂O. Despite that the average temperature during warm sorption is much higher than during cold sorption the total CO₂ capacity for both sorption steps are estimated to be equal. This is also shown in Table 1.

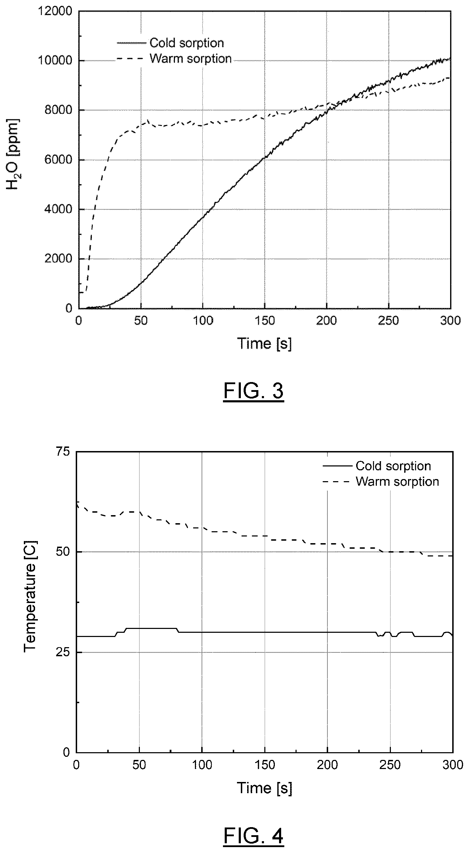

This is not the case for water adsorption. Figure 3 displays the H₂O breakthrough curves for cold sorption (continuous line) and warm sorption (dashed line). Here, a difference in the H₂O breakthrough is immediately obvious. In the cold sorption step, H₂O breakthrough only occurs after -50 seconds and afterwards, the signal is increasing slowly. Since the dosed amount of H₂O is -12.000 ppm, this indicates a significant amount of H₂O sorption. This was confirmed in the subsequent desorption step (Table 1). The H₂O breakthrough of the 2^{nd} sorption step (warm sorption) is clearly different; the H₂O signal at the exit of the reactor almost increases immediately to 7.000 ppm and then climbs slowly. Thus, the H₂O adsorption is much less when the sorbent is still warm at the onset of adsorption, even if the sorbent cools down to 27 °C at the end of the sorption step.

These results show that CO₂ is barely affected by an higher average temperature due to latent heat from the preceding desorption step. However, the effect on the H₂O sorption is significant; the warmer sorbent adsorbs much less H₂O during warm sorption, thus decreasing the H₂O:CO₂ ratio significantly; from 19 to 12 in this example, see Table 1.

| Cycle | Description | CO₂ capacity (g/kg) | H₂O capacity (g/kg) | H₂O:CO₂ (mol:mol) |
|---|---|---|---|---|
| 1 | Cold sorption | 13 | 96 | 19 |
| 2 | Warm sorption | 13 | 64 | 12 |

### Example 2: Warm sorption for activated carbon felts

For the breakthrough experiments a piece of felt was clamped between 2 electrodes in an enclosed reactor vessel allowing heat the felt by Joule heating in combination with adsorption and desorption experiments. The experiment was started for multiple adsorption and desorption cycles, with a short (60 seconds) cooldown time in between.

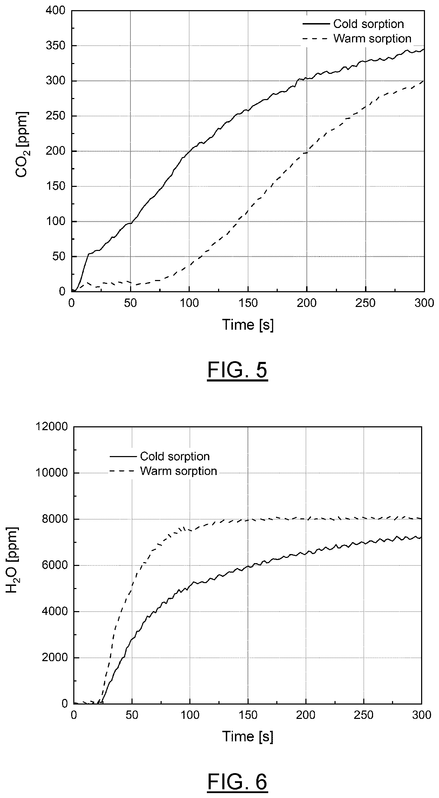

The first cycle had no preceding desorption step, thus, the effective operating temperature was at room temperature (27 °C) as can be seen in Figure 4. At the start of first adsorption step the initial temperature at t=0 is at 27 °C which remained constant over time. In this case the effective temperature did not increase significantly due to adsorption as the cooling of the felt in the resistive heating reactor is much faster than in the packed bed reactor, which has a much higher thermal mass. In the second sorption step which is indicated in Figure 4 with the dashed line, the sorbent is still warm from the preceding desorption step. The initial temperature is 60 °C at t=0 and decreases continuously towards 50 °C in 300 seconds. For both cases (cold and warm sorption), the CO₂ breakthrough curve in Figure 5 shows a significant CO₂ adsorption as the first CO₂ signal detected at the outlet concentration of 400 ppm (which is the inlet concentration) is never reached during the adsorption whole step. The CO₂ adsorption for the warm sorption cycle seems to be even larger compared to the case of cold sorption. This indicates that the sample is still sorbing CO₂ and is not saturated at the end of the sorption step.

For the water adsorption different effects are observed. Figure 6 shows the H₂O breakthrough curves for cold sorption (continuous line) and warm sorption (dashed line), here a difference in the H₂O breakthrough is immediately obvious. In the cold sorption step, H₂O breakthrough only occurs after the water concentration only increases slowly over time. The H₂O breakthrough of the 2nd sorption step (warm sorption) is clearly different; the H₂O signal at the exit of the reactor reaches the plateau much faster. Thus, the H₂O adsorption is much less when the sorbent is still warm at the onset of adsorption.

These results show that CO₂ adsorption is maintained or even increased by an higher average temperature due to latent heat from the preceding desorption step. However, the effect on the H₂O sorption is significant; the warmer sorbent adsorbs much less H₂O during warm sorption, thus the H₂O:CO₂ ratio can be decreased significantly by keeping the sorbent warm from the preceding desorption step.

These and other features of the invention are further elucidated with reference to the accompanying drawings.
Figure 1 shows a graph of the temperature profile for a cold sorption cycle (continuous line) and a warm sorption cycle (dashed line) for a granulate bed.
Figure 2 shows a graph of CO₂ breakthrough curves for a cold sorption cycle (continuous line) and a warm sorption cycle (dashed line) for a granulate bed.
Figure 3 shows a graph of H₂O breakthrough curves for a cold sorption cycle (continuous line) and a warm sorption cycle (dashed line) for a granulate bed.
Figure 4 shows a graph of the temperature profile for a cold sorption cycle (continuous line) and a warm sorption cycle (dashed line) for a felt.
Figure 5 shows a graph of CO₂ breakthrough curves for a cold sorption cycle (continuous line) and a warm sorption cycle (dashed line) for a felt.
Figure 6 shows a graph of H₂O breakthrough curves for a cold sorption cycle (continuous line) and a warm sorption cycle (dashed line) for a felt.

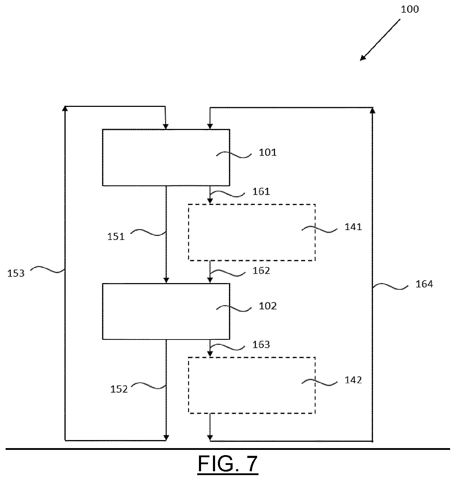

Figure 7 shows a process according to the invention.

In figure 4, a cyclic process 100 is shown for sorbing CO₂ from a gaseous composition. The process 100 comprises an adsorption step 101 and a subsequent desorption step 102. The desorption step 102 may directly follow adsorption step 101 (via pathway 151), but may, alternatively, comprise an optional intermediate step 141 (via pathway 161, 162). Since it is a cyclic process, a further sorption step 101 follows desorption step 102 (either directly, via pathway 153), or via an optional intermediate step 142 (via pathway 163, 164). It should be observed that the process may at some point be aborted, e.g. for maintenance. The process 100 will typically start with an adsorption step 101.

## Claims

1. Process for the capture of CO₂ from a gaseous composition, such as air, comprising:
- a sorption step, in which a solid sorbent capable of sorbing CO₂ and H₂O is contacted with the gaseous composition, thereby sorbing CO₂ from the gaseous composition to the sorbent, and
- a desorption step, in which the sorbent is heated to a temperature higher than that in the sorption step for releasing at least a part of the sorbed CO₂ from the sorbent
**characterized in that**
a sorption step subsequent to the desorption step substantially coincides with a cooldown phase of the desorption step.

2. Process according to claim 1, wherein the sorbent comprises a) a carrier with an internal pore structure and b) an active ingredient capable of sorbing CO₂ provided within the internal pore structure, preferably leaving a central part of the internal pore structure free from active ingredient.

3. Process according to claim 2, wherein the carrier comprises activated carbon, preferably in the form of a granulate or a fibre.

4. Process according to claim 1, 2 or 3, wherein the sorbent comprises one or more of an alkali or alkaline earth carbonate and preferably comprises and more preferably essentially consists of potassium carbonate.

5. Process according to any one of the preceding claims, wherein a further desorption step subsequent to the sorption step that coincides with the cooldown phase is started at or near the end of the cooldown phase.

6. Process according to any one of the preceding claims, wherein the cooldown phase has a duration chosen to keep a temperature of the sorbent throughout the sorption step at least 1 °C above an ambient temperature, preferably at least 2 °C above the ambient temperature, more preferably at least 5 °C above the ambient temperature, most preferably at least 10 °C above the ambient temperature.

7. Process according to any one of the preceding claims, wherein at a start of coincidence of the cooldown phase with the sorption step, the temperature of the sorbent is at least 10 °C above the ambient temperature, preferably at least 25 °C above the ambient temperature, more preferably at least 50 °C above the ambient temperature, most preferably at least 100 °C above the ambient temperature.

8. Process according to any of the preceding claims, wherein during a sorption step subsequent to a desorption step, the temperature of the sorbent is at such a temperature above an ambient temperature causing the molar ratio of H₂O sorbed to CO₂ sorbed to be reduced relative to sorption of the same sorbent at an ambient temperature.

9. Process according to any one of the preceding claims, wherein the ratio of a) the amount of H₂O sorbed divided by the amount of CO₂ sorbed during the sorption step with the temperature of the sorbent above the ambient temperature to b) the amount of H₂O sorbed divided by the amount of CO₂ sorbed during the sorption at a temperature substantially equal to the ambient temperature is at most 0.8, preferably at most 0.6, preferably at most 0.4, more preferably at most 0.3, most preferably at most 0.25.

10. Process according to any one of the preceding claims, wherein the process is a cyclic process, comprising a plurality of cycles, wherein each cycle comprises one sorption step and one desorption step.

11. Process according any one of the preceding claims, wherein the contacting of the gaseous composition with sorbent causes an exothermic chemical reaction of CO₂ and optionally H₂O with the active ingredient, thereby heating the sorbent and wherein during the sorption step the sorbent is contacted with the gaseous composition at a flow speed chosen such to keep the sorbent at a set temperature.

12. Process according to any one of the preceding claims, wherein during the sorption step, the sorbent is actively heated, preferably with one of steam, resistive heating, microwave heating, electromagnetic radiative heating and dielectric heating.

13. Process according to any one of the preceding claims, wherein in the sorption step, the gaseous composition is directed from an inlet towards an outlet, through the sorbent.

14. Process according to any one of the preceding claims, wherein the sorption step is essentially an adsorption step.

15. Process according to any one of the preceding claims, wherein the desorption step is carried out at such a heating rate that most of the CO₂ is released before most of the H₂O is released.
